# EUROPÄISCHE PATENTSCHRIFT

(11) **EP 3 853 491 B1**
(45) Veröffentlichungstag und Bekanntmachung des Hinweises auf die Patenterteilung: **03.08.2022**
(21) Anmeldenummer: 19769378.1
(22) Anmeldetag: 03.09.2019
(51) Int. Cl.: F16D 7/02, F16D 43/21

(54) **RUTSCHKUPPLUNGSEINRICHTUNG FÜR EINE ELEKTRISCHE ANTRIEBSMASCHINE**
SLIP CLUTCH DEVICE FOR AN ELECTRIC DRIVING MACHINE
DISPOSITIF D'EMBRAYAGE À FRICTION POUR UN MOTEUR D'ENTRAÎNEMENT ÉLECTRIQUE

(30) Priorität: 20.09.2018 DE 102018123137
(43) Veröffentlichungstag der Anmeldung: 28.07.2021
(73) Patentinhaber: Schaeffler Technologies AG & Co. KG, 91074 Herzogenaurach (DE)
(72) Erfinder: SCHNEIDER, Michael, 76534 Baden-Baden (DE)
(86) Internationale Anmeldenummer: PCT/DE2019/100793
(87) Internationale Veröffentlichungsnummer: WO 2020/057691

(56) Entgegenhaltungen:
- EP-A1- 3 001 062
- US-A1- 2012 115 620

## Beschreibung

Die Erfindung betrifft eine Rutschkupplungseinrichtung für eine elektrische Antriebsmaschine, einen Antriebsstrang mit einer solchen Rutschkupplungseinrichtung, sowie ein Kraftfahrzeug mit einem solchen Antriebsstrang.

Moderne Elektromotoren zum Antrieb von Fahrzeugen werden über Frequenzumrichter gesteuert. Dabei werden hohe Taktfrequenzen im Bereich von 20 kHz [zwanzig Kilohertz] und höher eingesetzt, um nahezu sinusförmige Stromverläufe am Motor zu erhalten. Aufgrund der hohen Taktfrequenz und kurzen Schaltzeiten können die Kapazitäten im Motor zwischen Gehäuse und Läufer, Gehäuse und Wicklung, sowie Wicklung und Läufer nicht mehr vernachlässigt werden. Über diese kapazitive Kopplung werden Spannungen zwischen dem Motorgehäuse und dem Läufer beziehungsweise der Welle erzeugt. Bei Verwendung von Lagern mit metallischen Wälzkörpern tritt diese Spannung am Lagerschmierspalt auf. Überschreitet die Lagerspannung die Durchschlagspannung des Schmierfilms, kommt es zu einem elektrischen Durchschlag. Dies führt zu sogenannter Funkenerosion und kann Schäden an den Lagern bewirken, bis hin zu deren Ausfall. Bei modernen Kraftfahrzeug-Elektroantrieben, beispielsweise bei sogenannten E-Achsen, ist der Elektromotor direkt an ein Getriebe angeflanscht oder sogar in das Gehäuse des Getriebes integriert. Daher besteht eine elektrische Verbindung vom Motorgehäuse zum Getriebegehäuse. Da die Welle des Elektromotors direkt mit der Eingangswelle des Getriebes verbunden ist, besteht hier ebenfalls eine elektrische Verbindung, sodass die parasitären Ströme auch durch das Getriebe und die dort befindlichen Lager sowie die abwälzenden Kontakte in den Verzahnungen der einzelnen Zahnräder gehen. Dort führen diese Ströme ebenfalls zu Funkenerosion in den Lagern sowie den Verzahnungen der Getriebezahnräder.

Elektrofahrzeuge benötigen für den reinen Fahrbetrieb im Gegensatz zu konventionell verbrennungsmotorisch angetriebenen Fahrzeugen keine Reibkupplung als Anfahrelement. Diese Reibkupplung hat neben der Funktion der Übertragung des Fahrmomentes von der Antriebsmaschine an das Getriebe auch noch den Vorteil, dass Stoßmomente, die von den Rädern in den Antriebstrang eingeleitet werden, begrenzt werden, indem die Kupplung im Überlastfall durchrutscht. Auch in Hybridfahrzeugen werden häufig sogenannte Rutschkupplungen zum Schutz des Antriebstranges eingesetzt. Stoßmomente beziehungsweise Überlastmomente, die von den Rädern in den Antriebstrang eingeleitet werden, gibt es aber auch bei Elektrofahrzeugen. Somit ist der gesamte Antriebstrang auf diese hohen Belastungen, die das Antriebsmoment um Faktor 3 bis 4 überschreiten können, auszulegen beziehungsweise sind diese Belastungen zum Schutz des Antriebstrangs zu begrenzen.

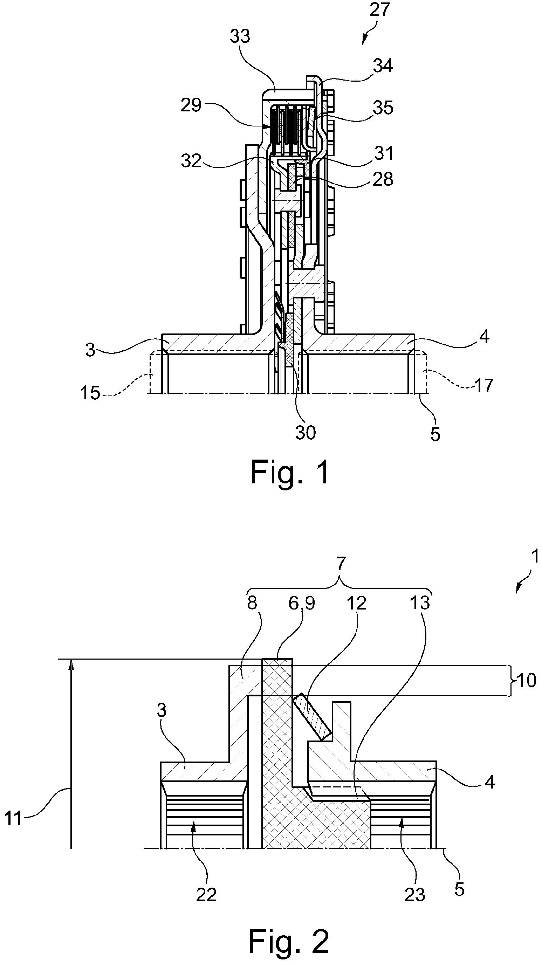

Aus der nachveröffentlichten DE 10 2018 115 083 A1 ist eine elektrisch isolierende Rutschkupplung für Kraftfahrzeugantriebsstrang und ein Kraftfahrzeugantriebsstrang bekannt. Hier wird unter anderem vorgeschlagen, als Rutschkupplung eine Lamellenkupplung mit einem Innenlamellenträger und einem Außenlamellenträger einzusetzen, wobei eine isolierende Scheibe zwischen dem außenverzahnten Ausgangslamellenträger und der Abtriebsnabe, also der Wellenverbindung zu der Getriebeeingangswelle, der Rutschkupplung anzuordnen ist. Eine solche Rutschkupplung ist in Fig. 1 gezeigt. Obgleich hier viele Standardelemente einsetzbar sind und enge Bauraumforderungen eingehalten werden können, ist der Aufbau aufwendig und damit kostenintensiv.

Die Veröffentlichungen US 2012/115620 A1 und EP 3 001 062 A1 zeigen weitere Rutschkupplungseinrichtungen aus dem Stand der Technik.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft eine Rutschkupplungseinrichtung für eine elektrische Antriebsmaschine, aufweisend zumindest die folgenden Komponenten:
- eine Eingangsseite;
- eine Ausgangsseite, wobei die Eingangsseite und die Ausgangsseite um eine gemeinsame Rotationsachse rotierbar sind;
- ein elektrisches Isolationselement, mittels welchem eine elektrische Durchschlagleitung zwischen der Eingangsseite und der Ausgangsseite unterbunden ist; und
- eine Rutschkupplung, welche die Eingangsseite und die Ausgangsseite drehmomentbegrenzend miteinander verbindet, wobei die Rutschkupplung eine Reibscheibe und eine antagonistische Reibplatte umfasst, welche in einem Kontaktbereich reibschlüssig drehmomentübertragend gegeneinander verpresst sind, und wobei die Rutschkupplung das Isolationselement umfasst.

Die Rutschkupplungseinrichtung ist vor allem dadurch gekennzeichnet, dass die Reibscheibe und/oder die Reibplatte zumindest in einem sich radial über den Kontaktbereich hinaus ausdehnenden Isolationsbereich aus einem elektrisch isolierenden Material gebildet sind, wobei der Isolationsbereich als Tragstruktur zum Übertragen eines Drehmoments in radialer Richtung eingerichtet ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden.

Es sei darauf hingewiesen, dass die hier vorgeschlagene Rutschkupplungseinrichtung beispielsweise in einem Kraftfahrzeug als isolierendes Element mit Überlastschutzfunktion in einen engen Bauraum zwischen einem Elektromotor und dem Getriebegehäuse passt. Dieser Bauraum entspricht in radialer Richtung meist in etwa dem Durchmesser des Läufers, und beträgt beispielsweise weniger als 200 mm [zweihundert Millimeter]. In axialer Richtung stehen bei direkt an das Getriebe angeschraubtem Motor beispielsweise maximal 15 mm [fünfzehn Millimeter] bis 30 mm zwischen dem Lager des Motors und der Dichtung beziehungsweise dem Lager des Getriebeeingangs zur Verfügung. Die Rutschkupplungseinrichtung soll dabei anstelle einer konventionell durchgehenden Verbindungswelle die elektrische Antriebsmaschine und das Getriebe verbinden, wobei die konventionelle durchgehende Verbindungswelle in zwei Teilwellen, beispielsweise die Antriebswelle der elektrischen Antriebsmaschine und die Getriebeeingangswelle des Getriebes unterteilt wird, welche miteinander verbunden werden. Der Einsatz der Rutschkupplungseinrichtung ist beispielsweise wie in der nachveröffentlichten DE 10 2018 115 083 A1 erläutert möglich.

Eine geeignete elektrische Antriebsmaschine ist achsparallel, koaxial (mit Antriebswelle als Hohlwelle) oder quer zu einer Abtriebswelle angeordnet und mit dieser über ein Getriebe drehmomentübertragend verbunden. Das Getriebe ist ein Übersetzungsgetriebe, beispielsweise eine einfache Zahnradstufe oder ein Schaltgetriebe beziehungsweise ein stufenlos schaltbares Umschlingungsgetriebe, und/oder ein Differential zum bedarfsgerechten Verteilen des anliegenden Drehmoments. Die elektrische Antriebsmaschine ist beispielsweise an der Hinterachse oder Vorderachse eines Kraftfahrzeugs einsetzbar, und zwar als einzige Antriebsmaschine (Elektrofahrzeug), als zusätzliche Antriebsmaschine neben einer weiteren Antriebsmaschine, beispielsweise einer Verbrennungskraftmaschine, oder als Starter-Generator zum Unterstützen und/oder Anlassen einer Verbrennungskraftmaschine und zum Umwandeln mechanischer Energie in elektrische Energie, beispielsweise mittels Rekuperation von Bremsenergie.

Die Rutschkupplungseinrichtung umfasst eine Eingangsseite, über welche ein Drehmoment eingebbar ist, und bevorzugt auch umgekehrt ein Drehmoment in Richtung hin zu der elektrischen Antriebsmaschine aufnehmbar ist. Diese Eingangsseite ist mit der elektrischen Antriebsmaschine verbindbar. Wenn die Eingangsseite Bestandteil einer separaten Baugruppe oder einer separaten (zusammenhängend vormontierten) Baueinheit der Rutschkupplung ist, ist sie als Eingangswellennabe ausgebildet. Die Eingangswellennabe ist formschlüssig, beispielsweise mittels einer Steckverzahnung oder mittels Bolzennieten, und/oder kraftschlüssig, beispielsweise mittels einer Verschraubung, mittelbar oder unmittelbar mit der Antriebswelle der elektrischen Antriebsmaschine drehmomentübertragend, bevorzugt drehmomentsteif, verbindbar. In einer alternativen Ausführungsform ist die Eingangsseite eine Komponente der Rutschkupplung selbst, beispielsweise die Reibscheibe selbst.

Die Rutschkupplungseinrichtung umfasst weiterhin eine Ausgangsseite, über welche ein Drehmoment abgebbar ist, und bevorzugt auch umgekehrt ein Drehmoment in Richtung hin zu der elektrischen Antriebsmaschine aufnehmbar ist. Diese Ausgangsseite ist mit der Getriebewelle verbindbar. Wenn die Ausgangsseite Bestandteil einer separaten Baugruppe oder einer separaten (zusammenhängend vormontierten) Baueinheit der Rutschkupplung ist, ist sie als Ausgangswellennabe ausgebildet. Die Ausgangswellennabe ist formschlüssig, beispielsweise mittels einer Steckverzahnung oder mittels Bolzennieten, und/oder kraftschlüssig, beispielsweise mittels einer Verschraubung, mittelbar oder unmittelbar mit der Getriebewelle des Getriebes drehmomentübertragend, bevorzugt drehmomentsteif, verbindbar. In einer alternativen Ausführungsform ist die Ausgangsseite eine Komponente der Rutschkupplung selbst, beispielsweise die Reibplatte selbst.

Die Eingangsseite, beispielsweise die Eingangswellennabe, und die Ausgangsseite, beispielsweise die Ausgangswellennabe, sind um eine gemeinsame Rotationsachse rotierbar, wobei hier ein Achsversatz von unter 1 mm [ein Millimeter], bevorzugt bis 0,7 mm [siebenhundert Mikrometer], im Toleranzbereich liegt.

Die Rutschkupplung verbindet die Eingangsseite und die Ausgangsseite drehmomentübertragend miteinander, wobei das maximal übertragbare Drehmoment auf einen maximalen Sollwert begrenzt ist, beispielsweise 10 % [zehn Prozent] bis 25 % oberhalb des (geforderten) maximal erzeugbaren Drehmoments der elektrischen Antriebsmaschine. Damit ist die Verbindung von der Eingangsseite und der Ausgangsseite drehmomentbegrenzt. Diese begrenzte Drehmomentübertragung ist, beispielsweise nach Art einer Bremse mit Bremsscheibe und Bremsblock, mittels einer eingangsseitigen, also mit der Eingangsseite drehmomentübertragend, bevorzugt drehmomentsteif, verbundenen, Reibscheibe und einer antagonistischen ausgangsseitigen, also mit der Ausgangsseite drehmomentübertragend, bevorzugt drehmomentsteif, verbundenen, Reibplatte geschaffen. Die Reibscheibe und/oder die Reibplatte sind axial bewegbar, bevorzugt verschiebbar, sodass eine (axiale) Anpresskraft einen Kontaktbereich der Reibscheibe und der Reibplatte derart gegeneinander führt, dass mittels des Kontaktbereichs ein Reibschluss gebildet ist. Die Reibscheibe und die Reibplatte sind damit also reibschlüssig drehmomentübertragend gegeneinander verpresst, wenn eine Anpresskraft anliegt. Diese Anpresskraft ist mittels Vorspannung, zumindest im Einsatz, von außen definiert aufgebbar. Beispielsweise ist die Anpresskraft von einer im Einsatz verspannt eingebauten Druckfeder erzeugt. Wird nun im Betrieb das anliegende Drehmoment größer als der maximale Sollwert, so hebt der axial bewegbare Reibpartner, also die Reibscheibe und/oder die Reibplatte, entgegen der anliegenden Anpresskraft mit einem Axialhub ab, sodass das übertragbare Drehmoment sinkt. Damit ist die elektrische Antriebsmaschine vor einem Überlastmoment oberhalb des maximalen Sollwerts eingehend von der Ausgangsseite geschützt und das Getriebe vor einem Stoßmoment oberhalb des maximalen Sollwerts ausgehend von der elektrischen Maschine geschützt.

Nun ist vorgeschlagen, dass die Rutschkupplung ein elektrisches Isolationselement umfasst, wobei mittels des elektrischen Isolationselements eine elektrische Durchschlagleitung zwischen der Eingangsseite und der Ausgangsseite unterbunden ist. Das Isolationselement ist dazu derart eingerichtet, dass seine eigene Impedanz sowie der Abstand zwischen (besser) leitenden angrenzenden Komponenten der Rutschkupplung derart groß sind, dass ein zu erwartendes Spannungspotential nicht zu einem elektrischen Durchschlag führen. Im Einsatz in einem elektrifizierten Antrieb eines Kraftfahrzeugs betragen zu erwartende Spannungspotentiale beispielsweise 2 kV [zweitausend Volt] bis 8 kV, vorzugsweise 3 kV bis 6 kV. Daraus folgt, dass ein Luftspalt beziehungsweise Abstand in Luftumgebung von etwa 1 mm [ein Millimeter] bis 4 mm, beispielsweise 2 mm bis 3 mm, erforderlich ist.

Hier ist nun vorgeschlagen, dass die Reibscheibe und/oder die Reibplatte der Rutschkupplung einen Isolationsbereich aus einem elektrisch isolierenden Material umfasst, beispielsweise Keramik oder einen elektrisch nicht-leitenden (beispielsweise faserverstärkten) Kunststoff. Um die oben genannte Bedingung zu erfüllen, ist der Isolationsbereich mit einer Ausdehnung so ausreichend weit über den Kontaktbereich hinaus gebildet, dass ein elektrischer Durchschlag durch das Isolationsmaterial und durch die Luft sicher unterbunden ist. Gleichzeitig bildet der Isolationsbereich den Kontaktbereich oder eine Tragstruktur für einen Reibbelag, wobei der Reibbelag (nur) bevorzugt ein elektrischer Nicht-Leiter ist. Der Isolationsbereich ist als Tragstruktur zum Übertragen eines Drehmoments in radialer Richtung eingerichtet. Damit ist der Isolationsbereich für eine ausreichend hohe und hinsichtlich Schwingungen und (geringen) dissipativen Verlusten hinreichend steife Drehmomentübertragung eingerichtet. Eine konventionelle Gummiverbindung, welche in einem Schwingungen und wechselnden Drehmomentrichtungen unterliegenden Antriebsstrang hohe dissipative Verluste verursacht, eingesetzt als Isolationsbereich ist damit ausgeschlossen, weil die Rutschkupplung für wechselnde Drehmomente, wie sie in mobilen Einheiten wie beispielsweise einem Kraftfahrzeug erforderlich sind, eingerichtet sein muss. Es sei in diesem Zusammenhang darauf hingewiesen, dass das Anliegen eines Überlastmoments oder Stoßmoments und damit ein Rutschen der Rutschkupplung ein seltener Betriebszustand ist und für die übrigen Betriebszustände eine möglichst verlustfreie Drehmomentübertragung angestrebt ist. Mit der vorliegenden Rutschkupplungseinrichtung und dem steifen Isolationsbereich ist dies erreichbar.

Die in der nachveröffentlichten DE 10 2018 115 083 A1 offenbarte isolierende Scheibe überträgt ein Drehmoment einzig in Umfangsrichtung beziehungsweise über (axiale) Scherung. Die Vielzahl der Reibbeläge in dem Lamellenpaket sind oftmals aus einem elektrisch isolierenden Material gebildet, aber ebenfalls einzig zum Übertragen eines Drehmoments in Umfangsrichtung beziehungsweise über (axiale) Scherung eingerichtet. Zudem ist der Luftspalt beziehungsweise Abstand zwischen zwei benachbarten Lamellen, welche aus elektrisch leitendem Material, beispielsweise Stahl, gebildet sind, zu gering, um einen elektrischen Durchschlag zu unterbinden. Zudem bilden, also definieren, die Reibbeläge den Kontaktbereich und bilden daher keinen Isolationsbereich, welcher sich über den Kontaktbereich hinaus ausdehnt. Ein konventionelles Lamellenpaket, wie in der zitierten nachveröffentlichten Druckschrift offenbart, ist daher nicht mit (gegen einen elektrischen Durchschlag ausreichenden) Isolationseigenschaften ausgeführt.

Vorteil der hier vorgeschlagenen Rutschkupplungseinrichtung ist die Möglichkeit eines einfachen, also kostengünstigen, und wenig Bauraum benötigenden Aufbaus. Zudem sind eine lange Lebensdauer erreichbar und ein Durchschlag insgesamt unterbindbar, also auch kein Durchschlag bei Zwischenbauteilen. Damit entfällt zudem eine (relative) Erdung, insbesondere mittels eines Schleifkontakts, von Zwischenbauteilen beziehungsweise eine entsprechend robuste Auslegung solcher Zwischenelemente gegen Funkenerosion.

Gemäß einer vorteilhaften Ausführungsform der Rutschkupplungseinrichtung umfasst die Rutschkupplung zum Übertragen eines Drehmoments einzig die Reibscheibe und die Reibplatte.

Alternativ zu der hier vorgeschlagenen Ausführungsform ist eine Mehrzahl von Reibscheiben und/oder Reibplatten zum Übertragen eines Drehmoments vorgesehen, wobei jede der Reibscheiben und/oder Reibplatten wie oben beschrieben zum Unterbinden eines elektrischen Durchschlags eingerichtet ist. Vorteil dieser Ausführungsform ist, dass über dieses Reibpaket mit mehreren Reibpaarungen auf einem geringen radialen Bauraum ein Mehrfaches (etwa entsprechend der Anzahl der Reibpaarungen) eines Drehmoments bei (etwa) gleicher Anpresskraft übertragbar ist.

Gemäß einer Ausführungsform umfasst die Rutschkupplung zum Übertragen eines Drehmoments einzig die Reibscheibe und die Reibplatte nach obiger Beschreibung, also nur eine einzige Reibscheibe und nur eine einzige Reibplatte, welche eine einzige (gemeinsame) Reibpaarung über den Kontaktbereich bilden. Der Aufbau ist besonders einfach und ein geringer axialer Bauraum benötigt. Bei geeigneter (dicker) Auslegung der Reibscheibe und der Reibplatte ist eine hohe Anpresskraft aufbringbar, womit reibschlüssig ein hohes Drehmoment übertragbar ist. Weil es sich hierbei um eine passive Rutschkupplung handelt, ist die Anpresskraft im Vergleich zu einer Reibkupplung zum aktiven Öffnen und Schließen, beispielsweise zum Verändern einer Übersetzung mittels einer Schaltkupplung, deutlich höher auslegbar.

Gemäß einer vorteilhaften Ausführungsform der Rutschkupplungseinrichtung sind die Reibscheibe und/oder die Reibplatte insgesamt aus einem elektrisch isolierenden Material gebildet.

Bei dieser Ausführungsform ist die Herstellung der Reibscheibe beziehungsweise der Reibplatte aus dem elektrisch isolierenden Material besonders einfach, beispielsweise bei einem Kunststoff mittels (beispielsweise 1K-) Spritzgießen oder bei einer Keramik mittels Sintern. Zudem ist die Gefahr eines Lichtbogenüberschlags von einem leitenden Bauteil auf ein anderes der Rutschkupplung beziehungsweise der Rutschkupplungseinrichtung aufgrund der mechanischen Anforderungen und daraus folgenden Bauteildicke beziehungsweise (radialen) Ausdehnung intrinsisch ausgeschlossen.

Gemäß einer vorteilhaften Ausführungsform der Rutschkupplungseinrichtung ist zum Verpressen der Reibscheibe und der Reibplatte eine axial wirkende Tellerfeder vorgesehen.

Eine Tellerfeder benötigt axial wenig Bauraum für eine sehr hohe erzeugbare beziehungsweise vorhaltbare Axialkraft. Zudem ist bei geeigneter Vorspannung die Steigung der Federkennlinie gering und daraus folgt ein nur geringer Kraftanstieg beim Axialhub der zu verpressenden Reibscheibe oder Reibplatte. Damit sind die verpressten Bauteile für den Normalbetrieb, also die reibschlüssige Drehmomentübertragung, nahe an ihrer jeweiligen Belastungsgrenze auslegbar. Beispielsweise nimmt bei einem Axialhub bei anliegendem Überlastmoment die Durchbiegung einer Reibfläche (infolge eines nicht sehr steilen Kraftanstiegs) nicht übermäßig zu, sodass in diesem Zustand eine ausreichende Drehmomentabnahme und/oder ein verschleißendes Schleifen bei Linienkontakt zwischen der Reibscheibe und der Reibplatte infolge einer übermäßigen Biegung verhindert ist.

Gemäß einer vorteilhaften Ausführungsform der Rutschkupplungseinrichtung ist die Reibscheibe mit der als Eingangswellennabe gebildeten Eingangsseite einstückig ausgebildet und/oder die Reibplatte mit der als Ausgangswellennabe gebildeten Ausgangsseite einstückig ausgebildet.

Bei dieser Ausführungsform ist die Anzahl der Bauteile der Rutschkupplungseinrichtung gegenüber der Ausführungsform gemäß der nachveröffentlichten DE 10 2018 115 083 A1 erheblich verringert. Der Aufbau ist insgesamt vereinfacht und kostengünstiger. Bei einer einstückigen Ausbildung der Reibscheibe mit der Eingangswellennabe und/oder der Reibplatte mit der Ausgangswellennabe ist nicht ausgeschlossen, dass beispielsweise ein Reibbelag separat gebildet ist. Die radiale Erstreckung der Reibscheibe bis zu der Eingangswellennabe und/oder der Reibplatte bis zu der Ausgangswellennabe ist aber einstückig ausgebildet, also die radiale Übertragung des Drehmoments ist durch die einstückige Reibscheibe und/oder die einstückige Reibplatte bis zu der jeweiligen Wellennabe bewerkstelligt. Die Eingangswellennabe und/oder die Ausgangswellennabe umfasst bevorzugt eine formschlüssige Anbindung, besonders bevorzugt mittels einer (außenseitigen oder innenseitigen) Steckverzahnung.

Gemäß einer vorteilhaften Ausführungsform der Rutschkupplungseinrichtung ist die Reibscheibe oder die Reibplatte mittels einer formschlüssigen Verbindung axial bewegbar mit der Eingangsseite beziehungsweise mit der Ausgangsseite drehmomentsteif verbunden.

Bei dieser Ausführungsform ist die Reibscheibe axial fixiert und die Reibplatte axial bewegbar, beispielsweise verschiebbar, oder die Reibplatte axial fixiert und die Reibscheibe axial bewegbar, beispielsweise verschiebbar. Der axial bewegbare Reibpartner, also die Reibscheibe oder die Reibplatte, ist einzig formschlüssig mit der jeweiligen Seite drehmomentsteif verbunden.

In einer Ausführungsform ist ein Dämpfer oder Tilger oder ein anderes Element zwischen dem (axial bewegbaren) Reibpartner und einer jeweiligen Nabe, also Eingangswellennabe oder Ausgangswellennabe, zwischengeschaltet. In dem Fall ist der betreffende Reibpartner lediglich in der unmittelbaren Verbindung hin zu der jeweiligen Nabe drehmomentsteif verbunden. Mit der betreffenden Nabe ist der betreffende Reibpartner lediglich mittelbar drehmomentübertragend verbunden. In diesem Fall ist die betreffende Seite nicht als mit der Nabe identisch zu sehen, auch wenn die Rutschkupplungseinrichtung eine vormontierte Baueinheit bildet.

Die formschlüssige Verbindung ist in einer Ausführungsform eine Steckverzahnung. In einer Ausführungsform ist die Steckverzahnung zum Einstecken in eine komplementäre Steckverzahnung einer Eingangswellennabe oder Ausgangswellennabe eingerichtet, wobei die komplementäre Steckverzahnung der betreffenden Nabe zum Verbinden mit einer Antriebswelle beziehungsweise einer Getriebeeingangswelle eingerichtet ist.

Gemäß einer Ausführungsform ist die Tellerfeder, nach einer Ausführungsform gemäß der obigen Beschreibung zum Verpressen der Reibscheibe und der Reibplatte, an der Eingangsseite beziehungsweise an der Ausgangsseite axial abgestützt. Bei dieser Ausführungsform ist die Tellerfeder innerhalb der Baueinheit der Rutschkupplungseinrichtung abgestützt, und muss daher nicht von dem Kunden montiert werden. Ein Kunde ist beispielsweise der Monteur eines OEM [engl.: Original Equipment Manufacturer; gemeint ist im Kraftfahrzeug-Bereich einer der (meist Endkonsumenten bekannten) Markenhersteller].

In einer Ausführungsform ist die Tellerfeder oder sind die Tellerfedern zwischen miteinander drehmomentsteif verbundenen Bauteilen angeordnet, beispielsweise zwischen einem Flansch der Eingangswellennabe und der (axial bewegbaren) Reibscheibe und/oder zwischen einem Flansch der Ausgangswellennabe und der (axial bewegbaren) Reibplatte.

Gemäß einem weiteren Aspekt wird ein Antriebsstrang vorgeschlagen, aufweisend eine elektrische Antriebsmaschine mit einer Antriebswelle, ein Getriebe mit einer Getriebeeingangswelle und mit einer Getriebeausgangswelle, sowie eine Rutschkupplungseinrichtung nach einer Ausführungsform gemäß der obigen Beschreibung, wobei die Antriebswelle mittels der Rutschkupplung gegen elektrische Durchschlagleitung und gegen ein Überlastdrehmoment gesichert drehmomentübertragend mit der Getriebeeingangswelle verbunden ist, sodass über die Getriebeausgangswelle an einen Verbraucher ein Drehmoment mit geänderter und/oder veränderbarer Übersetzung übertragbar ist.

Der Antriebsstrang ist dazu eingerichtet, ein von der elektrischen Antriebsmaschine bereitgestelltes und über ihre Antriebswelle abgegebenes Drehmoment für zumindest einen Verbraucher begrenzt, also nur bis zu einem gewünschten maximalen Sollwert, zu übertragen. Ein beispielhafter Verbraucher ist zumindest ein Antriebsrad eines Kraftfahrzeugs und/oder ein Nebenaggregat, wie beispielsweise eine Klimapumpe. Umgekehrt ist auch eine Aufnahme einer von zum Beispiel einem Antriebsrad eingebrachten Trägheitsenergie umsetzbar. Die Trägheitsenergie wird mittels der Rutschkupplungseinrichtung drehmomentbegrenzt im Generatorbetrieb der elektrischen Antriebsmaschine in elektrische Energie umgewandelt, also beispielsweise die Bremsenergie eines Kraftfahrzeugs rekuperiert, also zur direkten elektrischen Versorgung von einem Verbraucher oder zur elektrischen Einspeicherung. Weiterhin sind in einer bevorzugten Ausführungsform eine Mehrzahl von Antriebsmaschinen vorgesehen. Beispiele sind Hybridantriebe aus einer oder mehreren elektrischen Antriebsmaschinen und zumindest einer Verbrennungskraftmaschine.

Um das Drehmoment nur begrenzt zu übertragen, ist die hier vorgeschlagene Rutschkupplungseinrichtung besonders vorteilhaft. Die Rutschkupplungseinrichtung ist axial so kompakt, dass auf ein (konventionell vorgesehenes) Rotorlager für den Läufer der elektrischen Antriebsmaschine rutschkupplungsseitig verzichtet werden kann, sodass also getriebeseitig lediglich ein einziges Wälzlager für die Rotorwelle und die Getriebeeingangswelle eingesetzt werden muss. Ein solches Wälzlager ist zudem kostengünstig ausführbar, weil die Rutschkupplungseinrichtung zugleich ein hinreichender Isolator gegen einen elektrischen Durchschlag ist, sodass getriebeseitig ein einfaches, beispielsweise (rein) metallisches, Wälzlager einsetzbar ist.

Gemäß einem weiteren Aspekt wird ein Kraftfahrzeug vorgeschlagen, aufweisend zumindest ein Antriebsrad, welches mittels eines Antriebsstrangs nach einer Ausführungsform gemäß der obigen Beschreibung antreibbar ist.

Elektrifizierte Kraftfahrzeuge weisen heutzutage einen großen Energiespeicher, beispielsweise einen Akkumulator auf Lithium-Basis, auf, sodass der verfügbare Bauraum gering ist. Zudem sind heutzutage die meisten elektrifizierten Kraftfahrzeuge als Hybrid-Fahrzeuge mit einer zusätzlich vorgesehenen Verbrennungskraftmaschine, beispielsweise als sogenannter Range-Extender [engl.: Reichweiten-Vergrößerer], ausgestattet, sodass der Bauraum weiter verringert ist. Es ist daher besonders vorteilhaft, eine Rutschkupplungseinrichtung kleiner Baugröße zu verwenden. Ähnlich gestaltet sich der Einsatz einer Rutschkupplungseinrichtung in motorisierten Zweirädern, für welche eine ähnliche Problemstellung gilt.

Der oben beschriebene Antriebsstrang weist eine Rutschkupplungseinrichtung besonders geringer Baugröße auf. Zugleich ist die Herstellung kostengünstig und es ist getriebeseitig ein kostengünstiges konventionelles Wälzlager einsetzbar.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Rutschkupplungseinrichtung mit Lamellenpaket;
- Fig. 2:: eine Rutschkupplungseinrichtung mit integriertem Isolationselement;
- Fig. 3:: eine Rutschkupplungseinrichtung mit integriertem Isolationselement in einer weiteren Ausführungsform; und
- Fig. 4:: ein Antriebsstrang in einem Kraftfahrzeug mit Rutschkupplungseinrichtung.

Fig. 1 zeigt im Schnitt eine konventionelle Rutschkupplungseinrichtung **27** wie sie beispielsweise in der nachveröffentlichten DE 10 2018 115 083 A1 beschrieben ist. Insofern wird für ein tieferes Verständnis dieser konventionellen Rückkopplungseinrichtung **27** auf die dortige detailliertere Erläuterung verwiesen. Hierbei wird eine Antriebswelle **15** (gestrichelt dargestellt) über eine Eingangsseite **3**, hier mittels einer Steckverzahnung verbunden, mit einer Getriebeeingangswelle **17** (gestrichelt dargestellt) über eine Ausgangsseite **4**, hier ebenfalls mittels einer Steckverzahnung verbunden, isoliert gegen einen elektrischen Durchschlag drehmomentbegrenzt verbunden. Das Drehmoment um die Rotationsachse **5** wird von einem Lamellenpaket **29** mit einer Mehrzahl von Innenlamellen, welche in einem Innenlamellenkorb **32** rotatorisch fixiert eingehängt sind, welcher wiederum hier mit der Ausgangsseite **4** drehmomentsteif verbunden ist, und mit einer Mehrzahl von Außenlamellen, welche in einem Außenlamellenkorb **33** rotatorisch fixiert eingehängt sind, welcher wiederum hier mit der Eingangsseite **3** drehmomentsteif verbunden ist, übertragen. Die Lamellen des Lamellenpakets **29** werden mittels einer Paketfeder **35**, hier als Tellerfeder ausgeführt, mit einer vorbestimmten Anpresskraft verpresst. Die Paketfeder **35** ist dafür gegen einen Deckel **34** abgestützt, wobei der Deckel **34** mit dem Außenlamellenkorb **33** axial und rotatorisch fixiert ist. Um die Isolation zu gewährleisten, ist eine Isolationsscheibe **28** bei der Ausgangsseite **4** vorgesehen, über welche der Innenlamellenkorb **32** mechanisch drehmomentübertragend mit der Ausgangsseite 4 verbunden ist. Hierzu sind in der gezeigten Ausführungsform in Umlaufrichtung (daher hier nicht deutlich erkennbar) wechselseitig Niete vorgesehen, welche entweder den Innenlamellenkorb **32** und die Isolationsscheibe **28** oder die Isolationsscheibe **28** und die Ausgangsseite **4** miteinander verbinden. Ein Drehmoment wird hierbei notwendigerweise von der Isolationsscheibe **28** übertragen und das Material der Isolationsscheibe **28** ist entsprechend auszuwählen. Allerdings wird das Drehmoment hierbei allein in Umfangsrichtung und über Scherung von der Isolationsscheibe **28** auf die angrenzenden Elemente (Innenlamellenkorb **32** und Ausgangsseite **4**) übertragen. Weiterhin sind aufgrund des hier gezeigten Aufbaus ein Deckelisolator **31** zwischen dem Innenlamellenkorb **32** und dem Deckel **34** notwendig. Zudem ist ein Wellenisolator **30** zwischen der Antriebswelle **15** und der Getriebeeingangswelle **17** vorgesehen. Vorteil dieser Ausführungsform ist, dass hier besonders viele Standardelemente verwendet werden, und diese konventionelle Rutschkupplungseinrichtung **27** daher kostengünstig fertigbar ist. Grundsätzlich ist die Anzahl der Lamellen beliebig oder auch anstelle eines Lamellenpakets eine Anpressplatte und eine Reibscheibe, beispielsweise mit beidseitig angeordneten Reibbelägen, sowie einer Gegenplatte ausführbar. Alternativ ist ohne Reibscheibe eine Anpressscheibe mit einer Gegenplatte zur reibschlüssigen Drehmomentübertragung verpressbar.

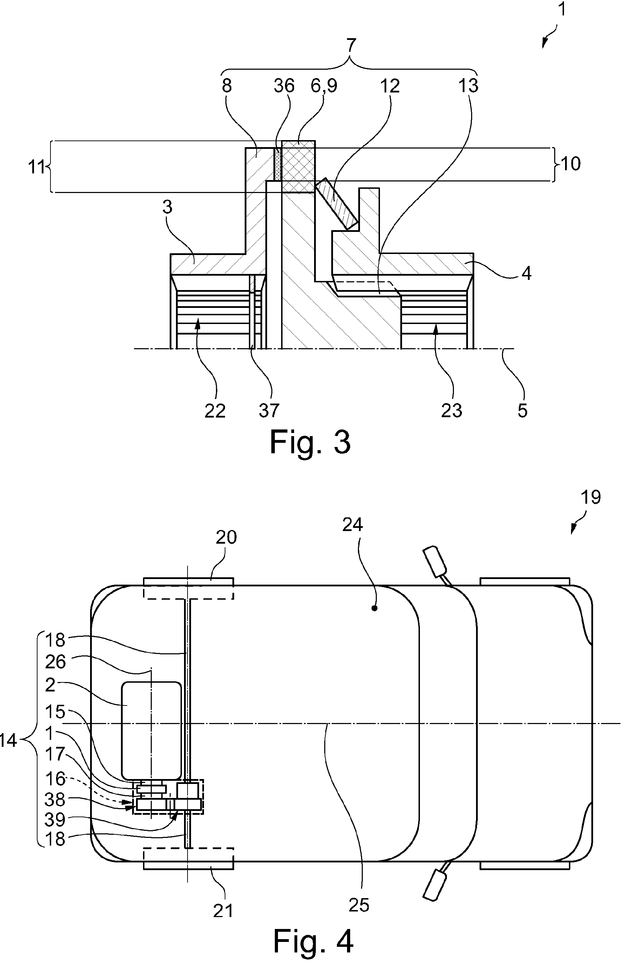

In Fig. **2** ist eine Rutschkupplungseinrichtung **1** in einer schematischen Schnittansicht gezeigt. Hierbei ist eine Eingangsseite **3**, welche als Eingangswellennabe mit einer (eingangsseitigen) Steckverzahnung **22** ausgeführt ist, und eine Ausgangsseite **4**, welche ebenfalls mit einer (ausgangsseitigen) Steckverzahnung **23** ausgeführt ist, um eine gemeinsame Rotationsachse **5** drehmomentbegrenzt und elektrisch voneinander isoliert miteinander verbunden. Die Eingangsseite **3** und die Ausgangsseite **4** sind wie auch in der Fig. **1** grundsätzlich umkehrbar, also die Eingangsseite **3** auch mit einer Getriebeeingangswelle **17** (vergleiche Fig. **1** oder Fig. **4**) und die Ausgangsseite mit einer Antriebswelle **15** (vergleiche Fig. **1** oder Fig. **4**) drehmomentsteif verbindbar. Auch sind weitere Zwischenelemente, wie beispielsweise ein Dämpfer oder Tilger zwischenschaltbar.

In der dargestellten Ausführungsform der Rutschkupplungseinrichtung **1** gemäß Fig. **2** und gemäß der (umkehrbaren) Bezeichnung von Eingangsseite **3** und Ausgangsseite **4** bildet die Eingangsseite **3**, hier optional einstückig, eine Reibscheibe **8** aus, welche in einem Kontaktbereich **10** mit der Reibplatte **9** in reibschlüssigen Kontakt gebracht ist und so die Rutschkupplung bilden. Die Reibplatte **9** ist separat von der Ausgangsseite **4** gebildet und relativ zu dieser axial verschiebbar, indem sie mittels einer, hier optional isolierten, Steckverzahnung **13** in die ausgangsseitige Steckverzahnung **23** der Ausgangsseite **4** eingesteckt und so drehmomentsteif mit der Ausgangsseite **4** verbunden ist. In dieser Ausführungsform bildet die Reibplatte **9** das Isolationselement **6** aus, indem in dieser optionalen Ausführungsform die gesamte Reibplatte **9** aus einem isolierenden Material, beispielsweise aus Keramik, gebildet ist.

Über den Kontaktbereich **10** mit der Reibscheibe **8** wird ein Drehmoment reibschlüssig auf die Reibplatte **9** übertragen und dieses Drehmoment wird in radialer Richtung hin zu der Steckverzahnung **13** geleitet, sodass das Isolationselement **6** als Tragstruktur ausgebildet ist. Der Isolationsbereich **11** dehnt sich hierbei sowohl nach radial außen als auch nach radial innen (hier bis zur Rotationsachse **5** beziehungsweise über die gesamte radiale Erstreckung), und hier zudem (optional) die gesamte axiale Erstreckung, über den Kontaktbereich **10** hinaus. Bei dieser Ausführungsform kann somit auf einen Wellenisolator **30**, wie in der Ausführungsform gemäß Fig. **1** benötigt, verzichtet werden. Auch ein Deckelisolator **31**, wie in der Ausführungsform gemäß Fig. **1** gezeigt, entfällt. Für eine definierte Anpresskraft ist hier eine Tellerfeder **12** vorgesehen, welche hier zwischen der Ausgangsseite **4** (mittels eines Flanschs) und der Reibplatte **9** auf die Rutschkupplung **7** derart einwirkt, dass ein Drehmoment reibschlüssig und begrenzt auf einen maximalen Sollwert zwischen der Eingangsseite **3** und der Ausgangsseite **4** übertragbar ist. Es sei noch einmal darauf hingewiesen, dass, auch wenn die Eingangsseite **3** mit einer elektrischen Antriebsmaschine **2** beziehungsweise deren Antriebswelle **15** (vergleiche Fig. **4**) und die ausgangsseitige mit einer Getriebeeingangswelle **17** eines Getriebes **16** (vergleiche Fig. **4**) verbunden ist, ein Drehmoment auch in umgekehrter Richtung von der Ausgangsseite **4** auf die Eingangsseite **3** übertragbar ist, beispielsweise zur Rekuperation von Bremsenergie.

In Fig. **3** ist der Übersichtlichkeit halber eine nahezu identische Ausführungsform der Rutschkupplungseinrichtung **1** wie in Fig. **2** dargestellt, wobei insofern auf die Beschreibung der Fig. **2** verwiesen wird. Im Unterschied zu der Ausführungsform gemäß Fig. **2** ist hier in Fig. **3** ein separater Reibbelag **36** an der Reibscheibe **8** vorgesehen, wobei zusätzlich oder alternativ entsprechend ein Reibbelag an der Reibplatte **9** vorgesehen werden kann. Ob ein Reibbelag **36** vorgesehen wird oder nicht, hängt von dem Bauraum, der gewünschten Anpresskraft und der erreichbaren Größe des Kontaktbereichs **10** ab, indem eine Reibpaarung mit einer hohen Reibzahl einstellbar ist, ohne dass das Material des Reibbelags eine Tragstruktur für eine radiale Übertragung eines Drehmoments bilden muss. Alternativ oder (korrespondierend) zusätzlich ist eine Oberflächenstruktur, beispielsweise eine Aufrauhung oder Riffelung, zur Erhöhung einer Reibzahl in der Reibscheibe und/oder in der Reibplatte vorgesehen.

Unabhängig von dem Vorsehen eines Reibbelags **36** ist in dieser Darstellung der Isolationsbereich **11** deutlich kleiner ausgeführt als in der Ausführungsform gemäß Fig. **2**, sodass radial innerhalb des Isolationsbereichs **11** ein gut elektrisch leitendes Material, beispielsweise Stahl, verwendbar ist. Das Material des Isolationsbereichs **11** ist hierbei formschlüssig, kraftschlüssig und/oder stoffschlüssig mit der übrigen Reibplatte **9** verbunden. Auch hierbei wird ein reibschlüssig über den Kontaktbereich **10** übertragenes Drehmoment innerhalb des Isolationsbereichs **11** in radialer Richtung hin zu der Steckverzahnung **13** der Reibplatte **9** übertragen.

In einer vorteilhaften Ausführungsform ist zudem ein Sicherungsring **37** vorgesehen, welcher aus konventionellem (gut elektrisch leitenden) Material oder einem Isolationsmaterial gebildet ist, welcher verhindert, dass eine eingesteckte Welle, beispielsweise die Antriebswelle **15** (vergleiche Fig. **1** oder Fig. **4**) zu nah an den elektrisch leitenden Bereich der Reibplatte **9** herangeführt werden kann, beziehungsweise aufgrund von thermischer Ausdehnung im Betrieb an die Reibplatte **9** zu nah herankommt. In einer alternativen Ausführungsform ist allein ein Bereich (hier ausgangsseitig) hin zu der Anbindung zu der Ausgangsseite **4** beziehungsweise der Eingangsseite **3** aus einem gut elektrisch leitenden Material gebildet, beispielsweise allein die Steckverzahnung **13**.

In einer Ausführungsform ist die Reibscheibe **8** axial bewegbar und/oder die Reibplatte **9** axial fixiert.

In Fig. **4** ist ein Antriebsstrang **14**, umfassend eine elektrische Antriebsmaschine **2** mit einer Antriebswelle **15**, weiterhin umfassend eine Rutschkupplungseinrichtung **1** und ein drehmomentbegrenzend verbundenes Getriebe **16** in einem Kraftfahrzeug **19** schematisch dargestellt. Der Antriebsstrang **14** ist hier zum Antreiben eines linken Antriebsrads **20** und eines rechten Antriebsrads **21**, welche also hier einen Verbraucher bilden, eingerichtet. Der Antriebsstrang **14** ist hier in dem Kraftfahrzeug **19** im Heck bezogen auf die Längsachse **25** und die vorne angeordnete Fahrerkabine **24** angeordnet. Die elektrische Antriebsmaschine **2** ist hier achsparallel zu der (zweiteiligen) Getriebeausgangswelle **18** angeordnet und hier zudem mit der Motorachse **26** quer zu der Längsachse **25** ausgerichtet. Die Antriebswelle **15** ist mittels der Rutschkupplungseinrichtung 1 drehmomentbegrenzt mit der Getriebeeingangswelle **17** verbunden, wobei die elektrische Antriebsmaschine **2** somit zugleich von den der Rutschkupplungseinrichtung **1** nachgeschalteten Komponenten des Getriebes **16** beziehungsweise des Antriebsstrangs **14** elektrisch isoliert ist, und zwar gegen eine Durchschlagspannung infolge von aufgebauten Kapazitäten. Das Getriebe **16** ist hier rein schematisch dargestellt mit einem (Drehzahl-) Untersetzungsgetriebe **38** und einem (beispielsweise Kegelrad-) Differential **39**. Damit sind ein linkes Antriebsrad **20** und ein rechtes Antriebsrad **21** nach Drehmomentbedarf in einer (beispielsweise festen) Untersetzung von der elektrischen Antriebsmaschine **2** antreibbar, sodass das Kraftfahrzeug **19** in einer Richtung (bei einer Kurvenfahrt zumindest infinitesimal) entlang der Längsachse **25** fortbewegbar ist.

Die hier vorgeschlagene Rutschkupplungseinrichtung weist einen kostengünstigen Aufbau mit geringem Bauraumbedarf und integrierter Durchschlagisolation auf.

### Bezugszeichenliste

- 1: Rutschkupplungseinrichtung
- 2: elektrische Antriebsmaschine
- 3: Eingangsseite
- 4: Ausgangsseite
- 5: Rotationsachse
- 6: Isolationselement
- 7: Rutschkupplung
- 8: Reibscheibe
- 9: Reibplatte
- 10: Kontaktbereich
- 11: Isolationsbereich
- 12: Tellerfeder
- 13: Steckverzahnung der Reibplatte
- 14: Antriebsstrang
- 15: Antriebswelle
- 16: Getriebe
- 17: Getriebeeingangswelle
- 18: Getriebeausgangswelle
- 19: Kraftfahrzeug
- 20: linkes Antriebsrad
- 21: rechtes Antriebsrad
- 22: eingangsseitige Steckverzahnung
- 23: ausgangsseitige Steckverzahnung
- 24: Fahrerkabine
- 25: Längsachse
- 26: Motorachse
- 27: konventionelle Rutschkupplungseinrichtung
- 28: Isolationsscheibe
- 29: Lamellenpaket
- 30: Wellenisolator
- 31: Deckelisolator
- 32: Innenlamellenkorb
- 33: Außenlamellenkorb
- 34: Deckel
- 35: Paketfeder
- 36: Reibbelag
- 37: Sicherungsring
- 38: Untersetzungsgetriebe
- 39: Differential

## Patentansprüche

1. Rutschkupplungseinrichtung (1) für eine elektrische Antriebsmaschine (2), aufweisend zumindest die folgenden Komponenten:
- eine Eingangsseite (3);
- eine Ausgangsseite (4), wobei die Eingangsseite (3) und die Ausgangsseite (4) um eine gemeinsame Rotationsachse (5) rotierbar sind;
- ein elektrisches Isolationselement (6), mittels welchem eine elektrische Durchschlagleitung zwischen der Eingangsseite (3) und der Ausgangsseite (4) unterbunden ist; und
- eine Rutschkupplung (7), welche die Eingangsseite (3) und die Ausgangsseite (4) drehmomentbegrenzend miteinander verbindet, wobei die Rutschkupplung (7) eine Reibscheibe (8) und eine antagonistische Reibplatte (9) umfasst, welche in einem Kontaktbereich (10) reibschlüssig drehmomentübertragend gegeneinander verpresst sind, und wobei die Rutschkupplung (7) das Isolationselement (6) umfasst,
**dadurch gekennzeichnet, dass**
die Reibscheibe (8) und/oder die Reibplatte (9) zumindest in einem sich radial über den Kontaktbereich (10) hinaus ausdehnenden Isolationsbereich (11) aus einem elektrisch isolierenden Material gebildet sind, wobei der Isolationsbereich (11) als Tragstruktur zum Übertragen eines Drehmoments in radialer Richtung eingerichtet ist.

2. Rutschkupplungseinrichtung (1) nach Anspruch 1, wobei die Rutschkupplung (7) zum Übertragen eines Drehmoments einzig die Reibscheibe (8) und die Reibplatte (9) umfasst.

3. Rutschkupplungseinrichtung (1) nach Anspruch 1 oder 2, wobei die Reibscheibe (8) und/oder die Reibplatte (9) insgesamt aus einem elektrisch isolierenden Material gebildet sind.

4. Rutschkupplungseinrichtung (1) nach einem der vorhergehenden Ansprüche, wobei zum Verpressen der Reibscheibe (8) und der Reibplatte (9) eine axial wirkende Tellerfeder (12) vorgesehen ist.

5. Rutschkupplungseinrichtung (1) nach einem der vorhergehenden Ansprüche, wobei die Reibscheibe (8) mit der als Eingangswellennabe gebildeten Eingangsseite (3) einstückig ausgebildet ist und/oder die Reibplatte (9) mit der als Ausgangswellennabe gebildeten Ausgangsseite (4) einstückig ausgebildet ist.

6. Rutschkupplungseinrichtung (1) nach einem der vorhergehenden Ansprüche, wobei die Reibscheibe (8) oder die Reibplatte (9) mittels einer formschlüssigen Verbindung, bevorzugt einer Steckverzahnung (13), axial bewegbar mit der Eingangsseite (3) beziehungsweise mit der Ausgangsseite (4) drehmomentsteif verbunden ist, wobei bevorzugt die Tellerfeder (12) nach Anspruch 3 an der Eingangsseite (3) beziehungsweise an der Ausgangsseite (4) axial abgestützt ist.

7. Antriebsstrang (14) aufweisend eine elektrische Antriebsmaschine (2) mit einer Antriebswelle (15), ein Getriebe (16) mit einer Getriebeeingangswelle (17) und mit einer Getriebeausgangswelle (18), sowie eine Rutschkupplungseinrichtung (1) nach einem der vorhergehenden Ansprüche, wobei die Antriebswelle (15) mittels der Rutschkupplung (7) gegen elektrische Durchschlagleitung und gegen ein Überlastdrehmoment gesichert drehmomentübertragend mit der Getriebeeingangswelle (17) verbunden ist, sodass über die Getriebeausgangswelle (18) an einen Verbraucher (20,21) ein Drehmoment mit geänderter und/oder veränderbarer Übersetzung übertragbar ist.

8. Kraftfahrzeug (19), aufweisend zumindest einen Antriebsstrang (14) nach Anspruch 7 und ein Antriebsrad (20,21), welches mittels des Antriebsstrangs (14) antreibbar ist.

## Claims

1. A slip clutch device (1) for an electric driving machine (2) having at least the following components:
- an input side (3);
- an output side (4), wherein the input side (3) and the output side (4) are rotatable about a common axis of rotation (5);
- an electrical insulation element (6), by means of which an electrical breakdown conduction between the input side (3) and the output side (4) is prevented; and
- a slip clutch (7) that connects the input side (3) and the output side (4) with one another in a torque-limiting manner, wherein the slip clutch (7) comprises a friction disc (8) and an antagonistic friction plate (9), which are pressed against one another in a contact region (10) in a frictionally engaged manner in a torque-transmitting manner, and wherein the slip clutch (7) comprises the insulation element (6),
**characterised in that**
the friction disc (8) and/or the friction plate (9) are formed from an electrically insulating material, at least in an insulating region (11) that extends radially beyond the contact region (10), wherein the insulating region (11) is configured as a supporting structure for transmitting a torque in the radial direction.

2. The slip clutch device (1) according to claim 1, wherein the slip clutch (7) comprises only the friction disc (8) and the friction plate (9) for transmitting a torque.

3. The slip clutch device (1) according to claim 1 or 2, wherein the friction disc (8) and/or the friction plate (9) are formed entirely of an electrically insulating material.

4. The slip clutch device (1) according to any one of the preceding claims, wherein an axially acting disc spring (12) is provided for pressing the friction disc (8) and the friction plate (9).

5. The slip clutch device (1) according to any one of the preceding claims, wherein the friction disc (8) is formed in one piece with the input side (3) formed as the input shaft hub and/or the friction plate (9) is formed in one piece with the output side (4) formed as the output shaft hub.

6. The slip clutch device (1) according to any one of the preceding claims, wherein the friction disc (8) or the friction plate (9) can be moved axially with the input side (3) or with the output side (4) by means of a positive connection, preferably a spline (13), and is connected in a torque-resistant manner, wherein the plate spring (12) according to claim 3 is preferably axially supported on the input side (3) or on the output side (4).

7. A drive train (14) having an electric drive machine (2) with a drive shaft (15), a transmission (16) with a transmission input shaft (17) and with a transmission output shaft (18), and a slip clutch device (1) according to any one of the preceding claims, wherein the drive shaft (15) is connected in a torque-transmitting manner to the transmission input shaft (17) by means of the slip clutch (7), secured against electrical breakdown line and against an overload torque, so that a torque with a modified and/or variable transmission ratio can be transmitted to a consumer (20, 21) via the transmission output shaft (18).

8. A motor vehicle (19) having at least one drive train (14) according to claim 7 and a drive wheel (20, 21), which can be driven by means of the drive train (14).

## Revendications

1. Dispositif d'embrayage à friction (1) pour un moteur d'entraînement (2) électrique, comprenant au moins les composants suivants :
- un côté d'entrée (3) ;
- un côté de sortie (4), dans lequel le côté d'entrée (3) et le côté de sortie (4) peuvent tourner autour d'un axe de rotation (5) commun ;
- un élément d'isolation (6) électrique au moyen duquel une conduction de percement électrique entre le côté d'entrée (3) et le côté de sortie (4) est supprimée ; et
- un embrayage à friction (7), lequel relie l'un à l'autre le côté d'entrée (3) et le côté de sortie (4) d'une manière à limiter le couple, dans lequel l'embrayage à friction (7) comprend un disque de friction (8) et un plateau de friction (9) antagoniste, lesquels sont pressés l'un contre l'autre de manière à transmettre le couple par friction dans une zone de contact (10) et dans lequel l'embrayage à friction (7) comprend l'élément d'isolation (6),
**caractérisé en ce que**
le disque de friction (8) et/ou le plateau de friction (9) sont formés à partir d'une matière électriquement isolante, au moins dans une zone d'isolation (11) s'étendant radialement au-delà de la zone de contact (10), dans lequel la zone d'isolation (11) est conçue sous la forme de structure de support servant à la transmission d'un couple dans la direction radiale.

2. Dispositif d'embrayage à friction (1) selon la revendication 1, dans lequel l'embrayage à friction (7) ne comprend que le disque de friction (8) et le plateau de friction (9) pour transmettre un couple.

3. Dispositif d'embrayage à friction (1) selon la revendication 1 ou 2, dans lequel le disque de friction (8) et/ou le plateau de friction (9) sont formés entièrement d'une matière électriquement isolante.

4. Dispositif d'embrayage à friction (1) selon l'une quelconque des revendications précédentes, dans lequel un ressort à disque (12) agissant axialement est fourni pour presser le disque de friction (8) et le plateau de friction (9).

5. Dispositif d'embrayage à friction (1) selon l'une quelconque des revendications précédentes, dans lequel le disque de friction (8) est formé monobloc avec le côté d'entrée (3) formé sous la forme de moyeu d'arbre d'entrée et/ou le plateau de friction (9) est formé monobloc avec le côté de sortie (4) formé sous la forme de moyeu d'arbre de sortie.

6. Dispositif d'embrayage à friction (1) selon l'une quelconque des revendications précédentes, dans lequel le disque de friction (8) ou le plateau de friction (9) est relié, au moyen d'une liaison par complémentarité de forme, de préférence d'une denture d'engagement (13), mobile axialement, au côté d'entrée (3), ou au côté de sortie (4) de manière solidaire en couple, dans lequel, de préférence le ressort à lames (12) selon la revendication 3 est, supporté axialement sur le côté d'entrée (3) ou le côté de sortie (4).

7. Chaîne cinématique (14) comportant un moteur d'entraînement (2) électrique comportant un arbre d'entraînement (15), une boîte de vitesse (16) comportant un arbre d'entrée de boîte (17) et comportant un arbre de sortie de boîte (18), ainsi qu'un dispositif d'embrayage à friction (1) selon l'une quelconque des revendications précédentes, dans laquelle l'arbre d'entraînement (15) est relié d'une manière à transmettre un couple à l'arbre d'entrée de boîte (17) au moyen de l'embrayage à friction (7), sécurisé contre une conduction de percement électrique et contre un couple de surcharge de telle sorte qu'un couple avec une translation modifiée et/ou modifiable soit transférable à un consommateur (20, 21) par l'arbre de sortie de boîte (18).

8. Véhicule automobile (19) comportant au moins une chaîne cinématique (14) selon la revendication 7 et une roue motrice (20, 21) pouvant être entraînée au moyen de la chaîne cinématique (14).
